# EUROPÄISCHE PATENTSCHRIFT

(11) **EP 4 127 567 B1**
(45) Veröffentlichungstag und Bekanntmachung des Hinweises auf die Patenterteilung: **17.06.2026**
(21) Anmeldenummer: 21717361.6
(22) Anmeldetag: 31.03.2021
(51) Int. Cl.: F24C 9/00, H05B 1/02, F24C 7/08, H02J 3/32, H02J 3/38, H02J 3/14

(54) **SYSTEM MIT GARGERÄTEN**
SYSTEM COMPRISING A COOKING APPLIANCES
SYSTÈME COMPRENANT DES APPAREILS DE CUISSON

(30) Priorität: 01.04.2020 DE 102020109015
(43) Veröffentlichungstag der Anmeldung: 08.02.2023
(73) Patentinhaber: Rational Wittenheim SAS, 68270 Wittenheim (FR)
(72) Erfinder: SCHORR, Fabrice, 68270 Wittenheim (FR)
(74) Vertreter: Prinz & Partner mbB
(86) Internationale Anmeldenummer: PCT/EP2021/058491
(87) Internationale Veröffentlichungsnummer: WO 2021/198363

(56) Entgegenhaltungen:
- EP-A1- 2 211 117
- WO-A1-2011/106355
- WO-A1-2018/116056
- BE-B1- 1 022 208
- CN-A- 102 183 048
- CN-A- 109 276 149
- JP-A- H05 226 071

## Beschreibung

Die Erfindung betrifft ein System mit mindestens zwei Gargeräten.

Bei gewerblichen Kunden von Energieversorgungsunternehmen wird Strom meist in solchen Mengen verbraucht, dass die Abrechnung des Energieversorgers mittels RLM-Verfahren erfolgt. Bei Betrieben mit mehr als 100 MWh ist dies Standard. Dabei wird die verbrauchte Menge an Energie (in kWh) pro 15 min.-Zeitintervall gemessen und dividiert und der daraus folgende kW-Wert als Basis für den Leistungspreis verwendet (der gesamte Strompreis setzt sich aus Arbeitspreis und Leistungspreis zusammen). Der ermittelte Spitzenwert wird als Basis für den gesamten Monat verwendet. Wird nur einmalig ein hoher kW-Wert benötigt, so erhöhen sich die Kosten insgesamt. Um dies zu verhindern, sind Regelungen bekannt, bei denen Prozesse verzögert gestartet werden oder mit geringerer Intensität ablaufen, um einen definierten Spitzenwert nicht zu überschreiten.

Nachteilig ist, dass die Begrenzung ggf. negative Auswirkung auf die Prozesse haben kann, für die die Geräte eingesetzt werden oder dass Prozesse erst verspätet abgeschlossen werden. Handelt es sich beispielsweise um Gargeräte, muss verhindert werden, dass sich die Regelung, mit der die Leistungsaufnahme reduziert wird, negativ auf das Garergebnis auswirkt. Zudem sollten bestimmte Garprozesse nicht übermäßig lange verzögert werden.

Die WO 2018 / 116056 A1 offenbart eine Gargerätevorrichtung mit einem Heizelement und einer Schalteinheit. Die Schalteinheit ist eingerichtet, um das Heizelement in verschiedenen Betriebszuständen an verschiedene Versorgungsspannungen anzuschließen.

Die JP H05226071 A beschreibt ein Hochfrequenz-Heizgerät, zum Beispiel eine Mikrowelle. Das Heizgerät hat eine Batterie, wobei zum Betreiben des Heizgeräts eine Leistungsentnahme sowohl aus der Batterie als auch aus einer externen Leistungsquelle entnommen werden kann, um eine Heizleistung bereitstellen zu können, die allein mit der externen Leistungsquelle nicht realisiert werden könnte.

Die EP 2 211 117 A1 offenbart die Erstellung eines Ablaufplans für einen Garprozess in einem Gargerät.

Die CN 109276149 A1 offenbart, dass bei einem Stromausfall ein Ofen mittels vorher gespeicherter Energie weiter betrieben werden kann.

Die WO 2011 / 106355 A1 beschreibt, dass ein Benutzer eine Energiequelle zum Betreiben eines Gargeräts auswählen kann.

Die CN 102 183 048 A beschreibt eine Mikrowelle, die mittels erneuerbarer Energie versorgt wird, wobei die Energie in einer Batterie zwischengespeichert wird, die außerhalb der Mikrowelle angeordnet ist.

Die BE 1 022 208 B1 beschreibt einen Elektroherd, der mit Strom aus einer oder mehreren Batterien betrieben werden kann.

Die US 6,380,715 B1 beschreibt ein elektrisches System mit einem Netzanschluss und einer Batterie, wobei eine Leistungsentnahme aus dem Netzanschluss unter einem Schwellenwert liegen soll.

Es ist daher eine Aufgabe der vorliegenden Erfindung, ein System mit mindestens einem Gargerät bereitzustellen, bei dem eine Leistungsentnahme aus einem Stromnetz begrenzt ist, ohne dass die Begrenzung negative Auswirkungen auf den Garprozess hat. "Leistungsentnahme" ist hier die Leistung, die das Gargerät aus dem Stromnetz entnimmt. Von der Seite des Stromnetzes betrachtet handelt es sich also um die Leistungsabgabe an das Gargerät.

Diese Aufgabe wird erfindungsgemäß gelöst durch ein System mit mindestens einem elektrochemischen Energiespeicher und mit mindestens zwei Gargeräten, wobei jedes Gargerät eine Steuereinheit, einen Anschluss zum Anschließen des Gargeräts an ein Stromnetz und einen Anschluss zum Anschließen des Gargeräts an den Energiespeicher hat, wobei mindestens zwei Gargeräte an denselben Energiespeicher angeschlossen sind, wobei der mindestens eine Energiespeicher separat von den Gargeräten angeordnet ist, und wobei die Steuereinheiten eingerichtet sind, eine Leistungsentnahme aus dem Stromnetz und/oder aus einem Energiespeicher im Betrieb der Gargeräte basierend auf einem Heizbedarf der Gargeräte derart zu regeln, dass die Gesamtleistungsentnahme aus dem Stromnetz zum Betreiben sämtlicher Gargeräte einen definierten Schwellenwert nicht übersteigt. Das System hat eine Küchenmanagementeinrichtung, welche den Ablauf verschiedener Garprozesse steuert, wobei die Steuereinheiten mit der Küchenmanagementeinrichtung derart verbunden sind, dass die Steuereinheiten eingerichtet sind, von der Küchenmanagementeinrichtung Informationen über einen Heizbedarf von aktuellen und/oder geplanten Garprozessen zu empfangen.

Da die Gargeräte alternativ oder zusätzlich zum Stromnetz auch mittels des Energiespeichers betrieben werden können, wird der Vorteil erreicht, dass ein Gesamtleistungsbedarf der Gargeräte wahlweise aus dem Stromnetz oder dem Energiespeicher gedeckt werden kann, zumindest solange der Gesamtleistungsbedarf nicht über einem Gesamtanschlusswert der Gargeräte liegt. Insbesondere können die Gargeräte gleichzeitig mit Strom aus dem Stromnetz und mit Strom aus dem Energiespeicher versorgt werden, wenn der Stromverbrauch der Gargeräte in einem bestimmten Zeitintervall über einem definierten Schwellenwert liegt.

Somit kann eine Leistungsentnahme aus dem Stromnetz begrenzt werden, ohne dass sich die Begrenzung der Leistungsentnahme aus dem Stromnetz negativ auf die Garprozesse auswirkt. Das heißt, es müssen keine Garprozesse verzögert oder mit verringerter Leistung ablaufen. Insbesondere kann der Heizbedarf der Gargeräte vollständig gedeckt werden und die Garprozesse können optimal ablaufen. Durch die Begrenzung der Leistungsentnahme können zudem die Energiekosten begrenzt werden, sodass die Gargeräte besonders kosteneffizient betrieben werden können.

Ein weiterer Vorteil ist, dass besonders leistungsstarke Gargeräte mit einer bestehenden Infrastruktur betrieben werden können, ohne dass eine zusätzliche Investition in die Infrastruktur vorgenommen werden muss. Die in einem bestehenden System verlegten Anschlussleitungen sind nämlich üblicherweise auf einen definierten, maximalen Anschlusswert ausgelegt, der nicht überschritten werden darf.

Der definierte Schwellenwert, der nicht überschritten werden soll, liegt beispielsweise bei maximal 25 kW, insbesondere bei 20 kW.

Zudem ermöglicht das erfindungsgemäße System ein Energiekostenmanagement, indem der Energiespeicher aufgeladen werden kann, wenn vergleichsweise günstiger Strom zur Verfügung steht, und die Energie aus dem Energiespeicher genutzt wird, wenn es zu Engpässen kommt oder wenn Energie vergleichsweise teuer ist.

Der Anschluss zum Anschließen eines jeden Gargeräts an das Stromnetz ist insbesondere separat vom Anschluss zum Anschließen des jeweiligen Gargeräts an den Energiespeicher ausgebildet.

Der Heizbedarf wird beispielsweise basierend auf einer Differenz einer SollTemperatur und einer Ist-Temperatur ermittelt.

Die Steuereinheiten sind vorzugsweise eingerichtet, die Leistungsentnahme aus dem Stromnetz und/oder aus dem Energiespeicher basierend auf einem aktuellen Heizbedarf und/oder basierend auf einem zu erwartenden Heizbedarf zu regeln. Zum Beispiel sind die Steuereinheiten eingerichtet, eine Leistungsentnahme aus dem Energiespeicher hinauszuzögern, wenn absehbar ist, dass die Energie aus dem Energiespeicher zu einem späteren Zeitpunkt benötigt wird und der Energiespeicher in der Zwischenzeit nicht aufgeladen werden kann. Des Weiteren können die Steuereinheiten eingerichtet sein, eine Leistungsentnahme aus dem Stromnetz derart zu regeln, dass die Leistungsentnahme über einen längeren Zeitraum verteilt wird. Das heißt, dass eine Leistungsentnahme aus dem Stromnetz vorgezogen werden kann, um einen erwarteten Heizbedarf decken zu können, ohne dass die Leistungsentnahme aus dem Stromnetz den definierten Schwellenwert übersteigt.

Gemäß einer Ausführungsform sind die Steuereinheiten eingerichtet, die Gargeräte derart zu betreiben, dass zur Deckung von Bedarfsspitzen während der Garprozesse eine Leistungsentnahme gleichzeitig aus dem Stromnetz und dem Energiespeicher erfolgt. Die mit den Gargeräten durchgeführten Garprozesse können somit entsprechend einem optimalen Leistungsprofil erfolgen, wodurch ein optimales Garergebnis erreicht werden kann. Zum Beispiel kann eine Leistungsentnahme aus dem Energiespeicher erfolgen, wenn kurzzeitig eine Temperatur in einem Garraum eines Gargeräts besonders stark erhöht werden soll. Eine Bedarfsspitze tritt insbesondere dann auf, wenn ein Gesamtleistungsbedarf der Gargeräte den definierten Schwellenwert überschreitet beziehungsweise wenn der Stromverbrauch der Gargeräte über einem definierten Schwellenwert liegt.

Beispielsweise können die Steuereinheiten eingerichtet sein, die Gargeräte derart zu betreiben, dass während einer Vorheizphase eine Leistungsentnahme gleichzeitig aus dem Stromnetz und dem Energiespeicher erfolgt. Auf diese Weise kann die Vorheizphase im Vergleich zu einem Betrieb ohne Energiespeicher verkürzt sein, ohne dass eine Leistungsentnahme aus dem Stromnetz den definierten Schwellenwert überschreitet. Durch eine Verkürzung der Vorheizphase kann ein Garprozess insgesamt verkürzt sein.

Die Steuereinheiten können des Weiteren eingerichtet sein, eine Leistungsentnahme aus dem Energiespeicher derart zu regeln, dass die Leistungsentnahme aus dem Energiespeicher über einen Zeitraum von maximal 15 Minuten am Stück erfolgt. Auf diese Weise kann eine Kapazität des Energiespeichers begrenzt sein, sodass der Energiespeicher besonders kompakt ausgebildet sein kann. Beispielsweise hat der Energiespeicher eine Kapazität von 1,5 kWh bis 20 kWh. Indem eine Leistungsentnahme für maximal 15 Minuten am Stück erfolgt, wird zudem vermieden, dass sich der Energiespeicher zu schnell entlädt.

Die Steuereinheiten können zudem eingerichtet sein, die Gargeräte derart zu betreiben, dass bei einem Ausfall der Stromversorgung durch das Stromnetz die Gargeräte alleine durch den Energiespeicher betreibbar sind. Somit ist sichergestellt, dass Garprozesse auch bei Ausfall der Energieversorgung durch das Stromnetz weitergeführt oder zu Ende gebracht werden können.

Die Steuereinheiten sind vorzugsweise eingerichtet, um einen Aufladeprozess zum Laden des Energiespeichers zu steuern. So lässt sich beispielsweise steuern, wann der Energiespeicher geladen wird. Beispielsweise sind die Steuereinheiten eingerichtet, den Aufladeprozess des Energiespeichers in Abhängigkeit von einem erwarteten Heizbedarf zu steuern. Insbesondere sind die Steuereinheiten eingerichtet, den Aufladeprozess des Energiespeichers derart zu steuern, dass der Energiespeicher dann geladen wird, wenn der erwartete Heizbedarf gering ist und eine Leistungsentnahme aus dem Energiespeicher zumindest solange nicht erforderlich ist, bis der Energiespeicher zumindest bis zu einem vorgegebenen Ladezustand geladen ist.

Die Steuereinheiten sind beispielsweise eingerichtet, den Energiespeicher mittels erneuerbarer Energien aufzuladen, insbesondere mittels Photovoltaik oder Windenergie. Zu diesem Zweck ist das System beispielsweise mit einer Photovoltaikanlage oder einer Windenergieanlage verbunden. Dadurch lassen sich die Gargeräte besonders klimafreundlich betreiben. Zudem kann das Aufladen des Energiespeichers mittels erneuerbarer Energien besonders kostengünstig erfolgen.

Alternativ oder zusätzlich können die Steuereinheiten eingerichtet sein, den Energiespeicher mittels Nachtstroms aufzuladen. Nachtstrom ist in der Regel günstiger als Tagstrom, sodass durch Aufladen des Energiespeichers mittels Nachtstroms die Gargeräte besonders kostengünstig betrieben werden können.

Die Steuereinheiten können eingerichtet sein, die Gargeräte zumindest zeitweise derart zu betreiben, dass eine Leistungsentnahme ausschließlich aus dem Energiespeicher erfolgt, wenn dieser mittels erneuerbarer Energien aufgeladen wurde. Dies ermöglicht einen besonders kostengünstigen und klimafreundlichen Betrieb des Gargeräts.

Das Energiekostenmanagement kann folglich mittels der Steuereinheiten stattfinden.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 ein erfindungsgemäßes System mit mehreren Gargeräten,
- Figur 2 ein Diagramm zur Veranschaulichung eines Heizbedarfs eines Gargerätes während eines ersten Garprozesses,
- Figur 3 ein Diagramm zur Veranschaulichung eines Garprozesses, bei dem eine Störung auftritt,
- Figur 4 ein Diagramm zur Veranschaulichung eines weiteren Garprozesses,
- Figur 5 ein Diagramm zur Veranschaulichung noch eines weiteren Garprozesses, und
- Figur 6 ein Diagramm zur Veranschaulichung der Leistungsentnahme eines Gargeräts während mehrerer Garprozesse.

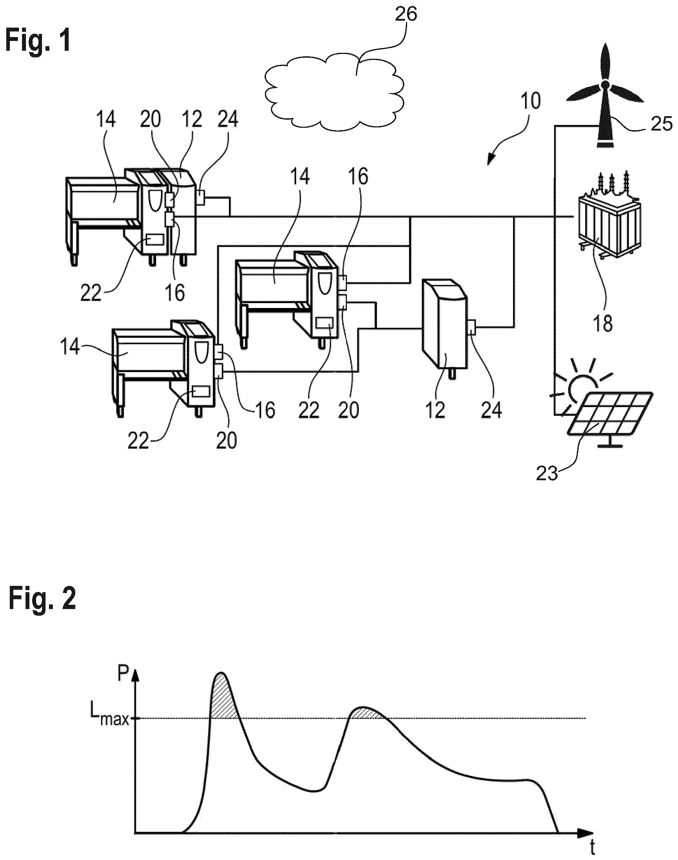

Figur 1 zeigt ein System 10 mit zwei Energiespeichern 12 und mehreren Gargeräten 14, die jeweils einen Anschluss 16 zum Anschließen des Gargeräts 14 an ein Stromnetz 18 und einen separat vom Anschluss 16 ausgebildeten Anschluss 20 zum Anschließen des Gargeräts 14 an den Energiespeicher 12 haben. Außerdem haben die Gargeräte 14 jeweils eine Steuereinheit 22. Im dargestellten Ausführungsbeispiel sind die Steuereinheiten 22 jeweils in den Gargeräten 14 integriert. Es ist jedoch auch möglich, dass die Steuereinheiten 22 in den Energiespeichern 12 integriert sind.

Die Gargeräte 14 sind jeweils an das Stromnetz 18 und an einen Energiespeicher 12 angeschlossen, sodass ein Leistungsbedarf der Gargeräte 14 sowohl durch den Energiespeicher 12 als auch durch das Stromnetz 18 bedient werden kann.

Bei den Gargeräten 14 handelt es sich insbesondere um multifunktionelle Gargeräte wie beispielsweise einen Kombidämpfer.

Die Energiespeicher 12 haben ebenfalls einen Anschluss 24 an das Stromnetz 18, um ein Aufladen der Energiespeicher 12 zu ermöglichen.

Alternativ oder zusätzlich können die Energiespeicher 12 an eine Photovoltaikanlage 23 oder eine Windenergieanlage 25 angeschlossen sein.

Sofern keine Energie zum Aufladen der Energiespeicher 12 notwendig ist, kann die aus der Photovoltaikanlage 23 oder der Windenergieanlage 25 gewonnene Energie in das Stromnetz 18 eingespeist werden.

Die Energiespeicher 12 sind jeweils separat von den Gargeräten 14 ausgebildet. Einer der Energiespeicher 12 ist direkt angrenzend an ein Gargerät 14 angeordnet und an dieses angeschlossen, während der weitere Energiespeicher 12 freistehend ist, also von den Gargeräten 14 beabstandet. An den freistehenden Energiespeicher 12 sind zwei Gargeräte 14 angeschlossen. Es ist nicht erfindungsgemäß auch denkbar, den Energiespeicher 12 in ein Gargerät 14 zu integrieren, allerdings würde dies einen Austausch der Energiespeicher 12 erschweren. Zudem würde dies das Gewicht des Gargeräts 14 stark erhöhen, sodass ein Transport erschwert ist.

Die Regulierung der Stromversorgung beziehungsweise der Leistungsentnahme aus dem Stromnetz 18 und aus dem Energiespeicher 12 erfolgt für jedes Gargerät 14 mittels der jeweiligen Steuereinheit 22, die eingerichtet ist, eine Leistungsentnahme aus dem Stromnetz 18 und/oder aus einem Energiespeicher 12 im Betrieb der Gargeräte 14 zu regeln, und zwar basierend auf einem Heizbedarf der Gargeräte 14. Anders ausgedrückt regelt die Steuereinheit 22 die Stromversorgung des jeweiligen Gargeräts 14.

Genauer gesagt ist jede Steuereinheit 22 eingerichtet, eine Leistungsentnahme aus dem Stromnetz 18 und/oder aus dem Energiespeicher 12 basierend auf einem aktuellen Heizbedarf und/oder basierend auf einem zu erwartenden Heizbedarf zu regeln.

Die Leistungsentnahme aus dem Stromnetz 18 soll dabei einen definierten Schwellenwert L_{Max} nicht übersteigen.

Zu diesem Zweck ist die Steuereinheit 22 eingerichtet, die Leistungsentnahme aus dem Stromnetz 18 derart zu regeln, dass der Schwellenwert L_{Max} nicht überschritten wird. Zusätzlich regelt die Steuereinheit 22 die Leistungsentnahme aus dem Energiespeicher 12 derart, dass der Gesamtleistungsbedarf des Gargeräts 14 gedeckt wird.

Es können auch Szenarien auftreten, beispielsweise beim Vor- oder Aufheizen, bei denen der Gesamtleistungsbedarf des Gargeräts 14 größer ist als ein Gesamtanschlusswert des Gargeräts 14. In diesem Fall regelt die Steuereinheit 22 die Leistungsentnahme aus dem Energiespeicher 12 derart, dass die Differenz zwischen dem Gesamtanschlusswert und dem maximalen Anschlusswert an das Stromnetz durch den Energiespeicher 12 ausgeglichen wird.

Die Steuereinheiten 22 können derart ausgebildet sein, dass sie miteinander kommunizieren können. Eine der Steuereinheiten 22 kann als Master für die übrigen Steuereinheiten 22 fungieren.

Eine Gesamtleistungsentnahme aus dem Stromnetz 18 zum Betreiben sämtlicher Gargeräte 14 soll den definierten Schwellenwert L_{Max} nicht überschreiten.

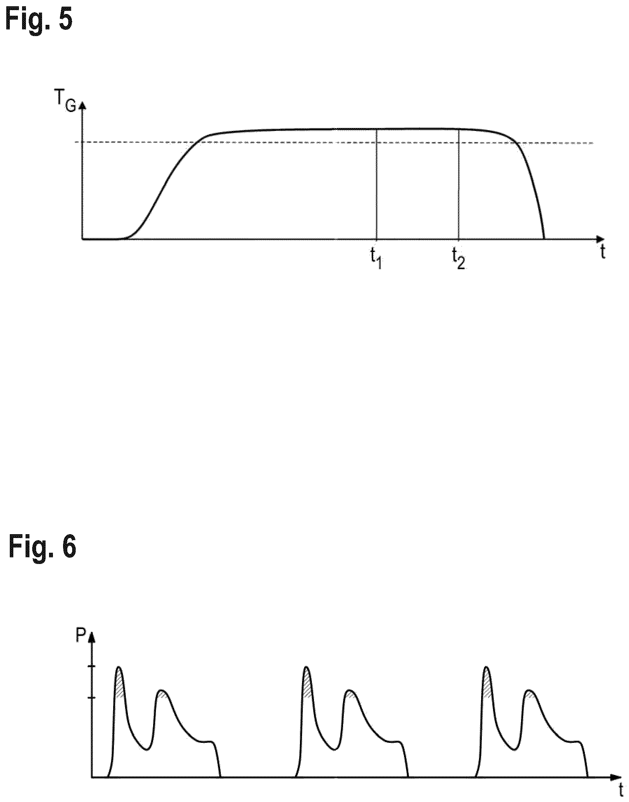

Die Figuren 2 bis 4 und Figur 6 veranschaulichen für verschiedene Szenarien die Leistungsentnahme eines Gargeräts 14 während eines Garprozesses beziehungsweise während mehrerer Garprozesse, wobei die Leistungsentnahme in einem Diagramm über die Dauer des Garprozesses aufgetragen ist. Figur 5 veranschaulicht einen Garprozess anhand eines Temperaturverlaufs.

Bei dem in Figur 2 veranschaulichten Szenario treten während des Garprozesses zwei Bedarfsspitzen auf, bei denen die Leistungsentnahme des Gargeräts besonders hoch ist und die Leistung den definierten Schwellenwert L_{Max} übersteigt. Die erste Bedarfsspitze tritt während einer Vorheizphase auf und die zweite Bedarfsspitze während einer Garphase, in welcher der Garraum mit einem Gargut beladen ist.

Um den Leistungsbedarf während der Bedarfsspitzen zu decken, regelt die Steuereinheit 22 während der Dauer der Überschreitung des definierten Schwellenwerts L_{Max} eine Stromversorgung des Gargeräts 14 derart, dass der Leistungsbedarf sowohl aus dem Stromnetz 18 als auch aus dem Energiespeicher 12 gedeckt ist. Anders ausgedrückt erfolgt während der Dauer der Überschreitung des definierten Schwellenwerts L_{Max} eine Leistungsentnahme gleichzeitig aus dem Stromnetz 18 und aus dem Energiespeicher.

Die Leistungsentnahme aus dem Energiespeicher erfolgt jedoch vorzugsweise über einen Zeitraum von maximal 15 Minuten am Stück.

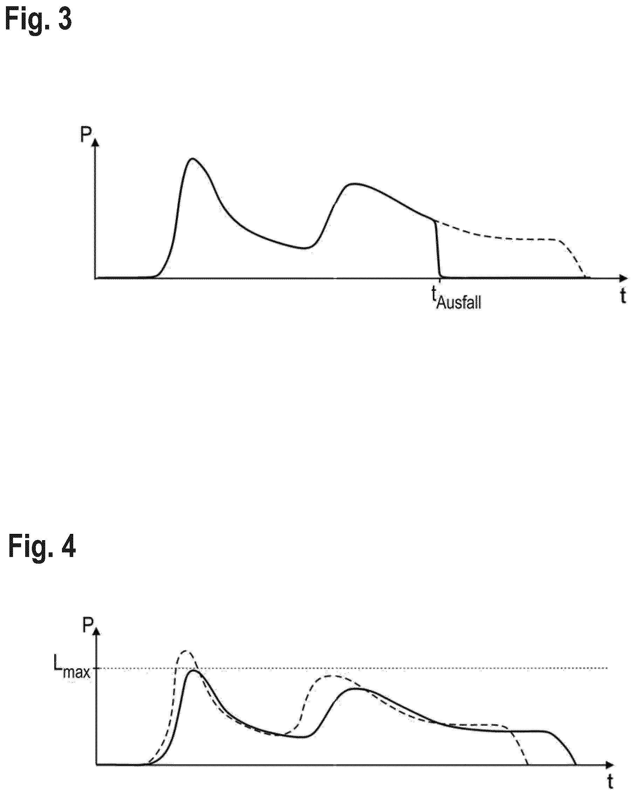

Figur 3 veranschaulicht ein Szenario, bei dem es während eines Garprozesses zu einem Stromausfall kommt.

In diesem Szenario wird ein Leistungsbedarf zunächst ausschließlich durch eine Leistungsentnahme aus dem Stromnetz 18 gedeckt, was in Figur 3 anhand einer durchgehenden Kurve veranschaulicht ist.

Ab einem Zeitpunkt t_{Ausfall}, an dem es zu einem Stromausfall kommt, regelt die Steuereinheit 22 eine Leistungsentnahme aus dem Stromnetz 18 und dem Energiespeicher 12 derart, dass der Leistungsbedarf des Gargeräts 14 ausschließlich durch eine Leistungsentnahme aus dem Energiespeicher 12 gedeckt wird, was in Figur 3 anhand einer gestrichelten Kurve veranschaulicht ist. Auf diese Weise kann ein Garprozess wie geplant beendet werden, und es wird verhindert, dass das im Garraum gegarte Gargut unbrauchbar wird oder ein Garergebnis nicht optimal ist. Eine derartige Regelung der Leistungsentnahme ist vor allem in solchen Regionen vorteilhaft, in denen häufig Störungen in der Stromversorgung auftreten.

Sollten bei dem in Figur 3 dargestellten Szenario vor dem Zeitpunkt t_{Ausfall} Bedarfsspitzen auftreten, können diese ebenfalls durch eine Leistungsentnahme aus dem Energiespeicher 12 gedeckt werden.

Figur 4 veranschaulicht ein Szenario, bei dem ein Leistungsbedarf des Gargeräts grundsätzlich aus dem Stromnetz 18 gedeckt werden kann, ohne dass ein definierter Schwellenwert L_{Max} überschritten wird. Dies ist in Figur 4 anhand einer ersten, durchgehenden Leistungskurve veranschaulicht.

Die Steuereinheit 22 ist jedoch eingerichtet, das Gargerät 14 derart zu betreiben, dass während einer Vorheizphase eine Leistungsentnahme zusätzlich aus dem Energiespeicher 12 erfolgt. Auf diese Weise kann die Vorheizphase verkürzt sein, wodurch der Garprozess insgesamt verkürzt ist. Während einer Vorheizphase kann beispielsweise ein Garraum des Gargeräts 14 auf eine definierte Temperatur oder Wasser zum Kochen gebracht werden. Zum Vergleich ist in Figur 4 eine Leistungskurve eines derart verkürzten Garprozesses gestrichelt eingezeichnet.

Figur 5 veranschaulicht ein Szenario, bei dem ein Garprozess über einen längeren Zeitraum, beispielsweise über acht Stunden hinweg abläuft. Insbesondere findet der Garprozess über Nacht statt. Bei dem in Figur 5 veranschaulichten Diagramm ist eine Garraumtemperatur T_{G} über die Zeit aufgetragen.

Nach einer Aufheizphase wird die Garraumtemperatur T_{G} möglichst konstant gehalten, beispielsweise auf mindestens 63°C. Dadurch wird ein zuverlässiger, durchgehender Garprozess gewährleistet. Insbesondere soll vermieden werden, dass sich ein Gargut während des Garprozesses auf eine Temperatur unter 63° abkühlt, bevor das Gargut vollständig gegart ist. Dadurch wird gewährleistet, dass die Qualität des Garguts nicht beeinträchtigt wird.

Bei dem in Figur 5 dargestellten Szenario kommt es während des Garprozesses zwischen einem Zeitpunkt t₁ und einem Zeitpunkt t₂ zum Ausfall der Stromversorgung durch das Stromnetz 18. Während dieses Zeitraums steuert die Steuereinheit 22 eine Leistungsversorgung des Gargeräts 14 derart, dass das Gargerät 14 alleine mittels des Energiespeichers 12 betrieben wird.

Sobald die Stromversorgung durch das Stromnetz 18 wieder möglich ist, insbesondere ab dem Zeitpunkt t₂, wird das Gargerät 14 wieder mittels Stroms aus dem Stromnetz 18 betrieben. Der Energiespeicher 12 kann ab dem Zeitpunkt t₂ wieder aufgeladen werden.

Figur 6 veranschaulicht ein Szenario, bei dem mehrere Garprozesse im Laufe eines Tages durchgeführt werden, im Ausführungsbeispiel drei Garprozesse.

Beispielsweise wird mindestens während des ersten Garprozesses das Gargerät 14 ausschließlich mittels des Energiespeichers 12 betrieben, sofern der Energiespeicher 12 mittels erneuerbarer Energien geladen wurde. Auf diese Weise kann der Einsatz von fossilen Brennstoffen oder Atomenergie zum Betreiben des Gargeräts 14 reduziert werden. Erst wenn der Energiespeicher 12 bis zu einem definierten Ladezustand oder vollständig entladen ist, wird das Gargerät 14 wieder mit Strom aus dem Stromnetz 18 betrieben, zum Beispiel beim dritten Garprozess. Vorzugsweise wird der Energiespeicher 12 während der ersten Garprozesse nicht vollständig entladen, sodass während des dritten Garprozesses zur Deckung von Bedarfsspitzen weiterhin der Energiespeicher 12 zugeschaltet werden kann.

Anschließend kann der Energiespeicher 12 wieder aufgeladen werden, beispielsweise mittels aus erneuerbaren Energien erzeugtem Strom und/oder mittels Nachtstroms.

Insbesondere ist die Steuereinheit 22 eingerichtet, um einen Aufladeprozess zum Laden des Energiespeichers 12 zu steuern. Beispielsweise steuert die Steuereinheit 22 den Aufladeprozess des Energiespeichers 12 derart, dass der Aufladeprozess dann startet, wenn ein erwarteter Heizbedarf über die Dauer des Aufladeprozesses gering ist. Somit kann ein Leistungsbedarf für den Zeitraum, in dem der Aufladeprozess stattfindet, vorzugsweise vollständig aus dem Stromnetz 18 gedeckt werden.

Das System 10 hat des Weiteren eine Küchenmanagementeinrichtung 26, welche den Ablauf verschiedener Garprozesse steuert.

Die Steuereinheiten 22 sind mit der Küchenmanagementeinrichtung 26 derart verbunden, dass die Steuereinheiten 22 eingerichtet sind, von der Küchenmanagementeinrichtung 26 Informationen über einen Heizbedarf von aktuellen und/oder geplanten Garprozessen zu empfangen.

Zu diesem Zweck sind die Steuereinheiten 22 entweder drahtlos oder über elektrische Leitungen mit der Küchenmanagementeinrichtung 26 kommunikationsverbunden.

Basierend auf den von der Küchenmanagementeinrichtung 26 erhaltenen Informationen über einen Heizbedarf der Garprozesse können die Steuereinheiten 22 eine Leistungsentnahme aus dem Stromnetz 18 und/oder aus den Energiespeichern 12 regeln.

Beispielsweise ist die Steuereinheit 22 eingerichtet, den Energiespeicher 12 mittels erneuerbarer Energien, insbesondere mittels Photovoltaik oder Windenergie, und/oder mittels Nachtstroms aufzuladen.

## Patentansprüche

1. System (10) mit mindestens einem elektrochemischen Energiespeicher (12) und mit mindestens zwei Gargeräten (14), wobei jedes Gargerät (14) eine Steuereinheit (22), einen Anschluss (16) zum Anschließen des Gargeräts (14) an ein Stromnetz (18) und einen Anschluss (20) zum Anschließen des Gargeräts (14) an den Energiespeicher (12) hat, wobei mindestens zwei Gargeräte (14) an denselben Energiespeicher (12) angeschlossen sind, wobei der mindestens eine Energiespeicher (12) separat von den Gargeräten (14) angeordnet ist, und wobei die Steuereinheiten (22) eingerichtet sind, eine Leistungsentnahme aus dem Stromnetz (18) und/oder aus dem Energiespeicher (12) im Betrieb der Gargeräte (14) basierend auf einem Heizbedarf der Gargeräte (14) derart zu regeln, dass Gesamtleistungsentnahme aus dem Stromnetz (18) zum Betreiben sämtlicher Gargeräte (14) einen definierten Schwellenwert (L_{Max}) nicht übersteigt, **dadurch gekennzeichnet, dass** das System (10) eine Küchenmanagementeinrichtung (26) hat, welche den Ablauf verschiedener Garprozesse steuert, wobei die Steuereinheiten (22) mit der Küchenmanagementeinrichtung (26) derart verbunden sind, dass die Steuereinheiten (22) eingerichtet sind, von der Küchenmanagementeinrichtung (26) Informationen über einen Heizbedarf von aktuellen und/oder geplanten Garprozessen zu empfangen.

2. System (10) nach Anspruch 1, **dadurch gekennzeichnet, dass** die Steuereinheiten (22) eingerichtet sind, die Leistungsentnahme aus dem Stromnetz (18) und/oder aus dem Energiespeicher (12) basierend auf einem aktuellen Heizbedarf und/oder basierend auf einem zu erwartenden Heizbedarf zu regeln.

3. System (10) nach einem der vorhergehenden Ansprüche, **dadurch gekennzeichnet, dass** die Steuereinheiten (22) eingerichtet sind, die Gargeräte (14) derart zu betreiben, dass zur Deckung von Bedarfsspitzen während der Garprozesse eine Leistungsentnahme gleichzeitig aus dem Stromnetz (18) und dem Energiespeicher (12) erfolgt.

4. System (10) nach einem der vorhergehenden Ansprüche, **dadurch gekennzeichnet, dass** die Steuereinheiten (22) eingerichtet sind, die Gargeräte (14) derart zu betreiben, dass während einer Vorheizphase eine Leistungsentnahme gleichzeitig aus dem Stromnetz (18) und dem Energiespeicher (12) erfolgt.

5. System (10) nach einem der vorhergehenden Ansprüche, **dadurch gekennzeichnet, dass** die Steuereinheiten (22) eingerichtet sind, eine Leistungsentnahme aus dem aus dem Energiespeicher (12) derart zu regeln, dass die Leistungsentnahme aus dem Energiespeicher (12) über einen Zeitraum von maximal 15 Minuten am Stück erfolgt.

6. System (10) nach einem der vorhergehenden Ansprüche, **dadurch gekennzeichnet, dass** die Steuereinheiten (22) eingerichtet sind, die Gargeräte (14) derart zu betreiben, dass bei einem Ausfall der Stromversorgung durch das Stromnetz (18) die Gargeräte (14) alleine durch den Energiespeicher (12) betreibbar sind.

7. System (10) nach einem der vorhergehenden Ansprüche, **dadurch gekennzeichnet, dass** die Steuereinheiten (22) eingerichtet sind, um einen Aufladeprozess zum Laden des Energiespeichers (12) zu steuern.

8. System (10) nach Anspruch 7, **dadurch gekennzeichnet, dass** die Steuereinheiten (22) eingerichtet sind, den Energiespeicher (12) mittels erneuerbarer Energien, insbesondere mittels Photovoltaik oder Windenergie, und/oder mittels Nachtstroms aufzuladen.

9. System (10) nach Anspruch 8, **dadurch gekennzeichnet, dass** die Steuereinheiten (22) eingerichtet sind, die Gargeräte (14) derart zu betreiben, dass eine Leistungsentnahme ausschließlich aus dem Energiespeicher (12) erfolgt, wenn dieser mittels erneuerbarer Energien aufgeladen wurde.

## Claims

1. A system (10) comprising at least one electrochemical energy storage device (12) and comprising at least two cooking devices (14), each cooking device (14) having a control unit (22), a connection (16) for connecting the cooking device (14) to an electrical grid (18) and a connection (20) for connecting the cooking device (14) to the energy storage device (12), at least two cooking devices (14) being connected to the same energy storage device (12), the at least one energy storage device (12) being arranged separately from the cooking devices (14), and the control units (22) being configured to regulate a power draw from the electrical grid (18) and/or from the energy storage device (12) during operation of the cooking devices (14) based on a heating requirement of the cooking devices (14) such that a total power draw from the electrical grid (18) to operate all of the cooking devices (14) does not exceed a defined threshold value (L_{Max}), **characterized in that** the system (10) has a kitchen management means (26) which controls the course of various cooking processes, the control units (22) being connected to the kitchen management means (26) such that the control units (22) are configured to receive information from the kitchen management means (26) about a heating requirement of current and/or planned cooking processes.

2. The system (10) according to claim 1, **characterized in that** the control units (22) are configured to regulate the power draw from the electrical grid (18) and/or from the energy storage device (12) based on a current heating requirement and/or based on an expected heating requirement.

3. The system (10) according to any of the preceding claims, **characterized in that** the control units (22) are configured to operate the cooking devices (14) such that a power draw takes place simultaneously from the electrical grid (18) and the energy storage device (12) to cover demand peaks during the cooking processes.

4. The system (10) according to any of the preceding claims, **characterized in that** the control units (22) are configured to operate the cooking devices (14) such that during a preheating phase, a power draw takes place simultaneously from the electrical grid (18) and the energy storage device (12).

5. The system (10) according to any of the preceding claims, **characterized in that** the control units (22) are configured to regulate a power draw from the energy storage device (12) such that the power draw from the energy storage device (12) takes place over a period of no more than 15 minutes at a time.

6. The system (10) according to any of the preceding claims, **characterized in that** the control units (22) are configured to operate the cooking devices (14) such that, in the event of a failure of the electricity supply by the electrical grid (18), the cooking devices (14) can be operated by the energy storage device (12) alone.

7. The system (10) according to any of the preceding claims, **characterized in that** the control units (22) are configured to control a charging process for charging the energy storage device (12).

8. The system (10) according to claim 7, **characterized in that** the control units (22) are configured to charge the energy storage device (12) by means of renewable energies, in particular by means of photovoltaics or wind energy, and/or by means of night current.

9. The system (10) according to claim 8, **characterized in that** the control units (22) are configured to operate the cooking devices (14) such that a power draw takes place exclusively from the energy storage device (12) when the latter has been charged by means of renewable energies.

## Revendications

1. Système (10) comprenant au moins un accumulateur d'énergie électrochimique (12) et au moins deux appareils de cuisson (14), chaque appareil de cuisson (14) comportant une unité de commande (22), un raccordement (16) pour raccorder l'appareil de cuisson (14) à un réseau électrique (18) et un raccordement (20) pour raccorder l'appareil de cuisson (14) à l'accumulateur d'énergie (12), au moins deux appareils de cuisson (14) étant raccordés au même accumulateur d'énergie (12), ledit au moins un accumulateur d'énergie (12) étant agencé séparément des appareils de cuisson (14), et les unités de commande (22) étant aménagées de manière à régler un prélèvement de puissance sur le réseau électrique (18) et/ou l'accumulateur d'énergie (12) lors du fonctionnement des appareils de cuisson (14) en fonction des demandes de chauffage des appareils de cuisson (14) de telle sorte que le prélèvement de puissance total sur le réseau électrique (18) pour la mise en œuvre de l'ensemble des appareils de cuisson (14) ne dépasse pas une valeur seuil définie (L_{Max}), **caractérisé en ce que** le système (10) comporte un moyen de gestion de cuisine (26) qui commande le déroulement de différents processus de cuisson, les unités de commande (22) étant reliées au moyen de gestion de cuisine (26) de telle sorte que les unités de commande (22) sont aménagées de manière à recevoir du moyen de gestion de cuisine (26) des informations sur une demande de chauffage des processus de cuisson actuels et/ou prévus.

2. Système (10) selon la revendication 1, **caractérisé en ce que** les unités de commande (22) sont aménagées de manière à régler le prélèvement de puissance sur le réseau électrique (18) et/ou l'accumulateur d'énergie (12) en fonction d'une demande de chauffage actuelle et/ou d'une demande de chauffage attendue.

3. Système (10) selon l'une des revendications précédentes, **caractérisé en ce que** les unités de commande (22) sont aménagées de manière à mettre en œuvre les appareils de cuisson (14) de telle sorte que, pour couvrir les pics de demande pendant les processus de cuisson, un prélèvement de puissance est effectué simultanément sur le réseau électrique (18) et l'accumulateur d'énergie (12).

4. Système (10) selon l'une des revendications précédentes, **caractérisé en ce que** les unités de commande (22) sont aménagées de manière à mettre en œuvre les appareils de cuisson (14) de telle sorte que, pendant une phase de préchauffage, un prélèvement de puissance est effectué simultanément sur le réseau électrique (18) et l'accumulateur d'énergie (12).

5. Système (10) selon l'une des revendications précédentes, **caractérisé en ce que** les unités de commande (22) sont aménagées de manière à régler un prélèvement de puissance sur l'accumulateur d'énergie (12) de telle sorte que le prélèvement de puissance sur l'accumulateur d'énergie (12) est effectué sur une période maximale de 15 minutes d'affilée.

6. Système (10) selon l'une des revendications précédentes, **caractérisé en ce que** les unités de commande (22) sont aménagées de manière mettre en œuvre les appareils de cuisson (14) de telle sorte qu'en cas de panne de l'alimentation électrique par le réseau électrique (18), les appareils de cuisson (14) sont aptes à être mis en œuvre uniquement par l'accumulateur d'énergie (12).

7. Système (10) selon l'une des revendications précédentes, **caractérisé en ce que** les unités de commande (22) sont aménagées de manière à commander un processus de recharge pour charger l'accumulateur d'énergie (12).

8. Système (10) selon la revendication 7, **caractérisé en ce que** les unités de commande (22) sont aménagées de manière à charger l'accumulateur d'énergie (12) au moyen d'énergies renouvelables, en particulier au moyen d'énergie photovoltaïque ou éolienne, et/ou au moyen d'électricité de nuit.

9. Système (10) selon la revendication 8, **caractérisé en ce que** les unités de commande (22) sont aménagées de manière à mettre en œuvre les appareils de cuisson (14) de telle sorte qu'un prélèvement de puissance est effectué exclusivement sur l'accumulateur d'énergie (12) lorsque celui-ci a été chargé au moyen d'énergies renouvelables.
